# FASCICULE DE BREVET EUROPEEN

(11) **EP 3 261 854 B1**
(45) Date de publication et mention de la délivrance du brevet: **22.05.2019**
(21) Numéro de dépôt: 16704020.3
(22) Date de dépôt: 12.02.2016
(51) Int. Cl.: B60C 11/03, B60C 11/11

(54) **PNEUMATIQUE AVEC BANDE DE ROULEMENT DIRECTIONNELLE COMPORTANT UNE ALTERNANCE DE BLOCS ET RAINURES INCURVES**
REIFEN MIT EINEM RICHTUNGSGEBUNDENEN PROFIL MIT ABWECHSELND GEKRÜMMTEN BLÖCKEN UND NUTEN
TYRE WITH A DIRECTIONAL TREAD COMPRISING ALTERNATE CURVED BLOCKS AND GROOVES

(30) Priorité: 27.02.2015 FR 1500391
(43) Date de publication de la demande: 03.01.2018
(73) Titulaire: Compagnie Générale des Etablissements Michelin, 63000 Clermont-Ferrand (FR)
(72) Inventeur: MOSNIER, David, 63040 Clermont-Ferrand Cedex 9 (FR); MONTARRAS, Michel, 63040 Clermont-Ferrand Cedex 9 (FR); HYE, Yann, 63040 Clermont-Ferrand Cedex 9 (FR)
(74) Mandataire: Demaure, Pierre-Yves
(86) Numéro de dépôt international: PCT/EP2016/053041
(87) Numéro de publication internationale: WO 2016/134988

(56) Documents cités:
- EP-A1- 2 769 856
- FR-A1- 2 291 879
- GB-A- 2 240 522
- US-A- 1 127 517

## Description

### DOMAINE TECHNIQUE DE L'INVENTION

La présente invention concerne un pneumatique pourvu d'une bande de roulement directionnelle adaptée pour des conditions météorologiques hivernales impliquant par exemple des routes recouvertes de glace et/ou de neige, la bande de roulement étant pourvue d'une pluralité de blocs en forme de courbes alignés le long de la bande de roulement.

### ETAT DE LA TECHNIQUE ANTERIEURE

Le document US4057089 décrit un pneumatique comportant une bande de roulement pourvue d'une pluralité de blocs. Chacun de ces blocs est agencé en forme de courbe et s'étend du centre de la bande de roulement vers un des bords. Certains blocs sont agencés en forme de courbe en parabole du second degré. Les blocs sont reliés à une bande centrale. Les blocs étant relativement larges, la rigidité de ces mêmes blocs est par conséquent importante, ce qui entraîne une usure rapide de la bande de roulement.

Le document GB2240522 décrit un pneumatique comportant une bande de roulement. Ladite bande de roulement comporte deux bords et un centre, cette bande de roulement comprend une pluralité de blocs de hauteur H séparés par des rainures de largeur W. Chaque bloc s'étend de manière continue selon une courbure globale C, d'un des bords vers le centre de ladite bande de roulement.

Pour pallier ces différents inconvénients, l'invention prévoit différents moyens techniques.

### EXPOSE DE L'INVENTION

Tout d'abord, un premier objet de l'invention consiste à prévoir une bande de roulement pour pneumatique permettant d'améliorer la durabilité.

Un autre objet de l'invention consiste à prévoir un pneumatique dont la bande de roulement permet de réduire les coincements de pierres et cailloux dans les rainures.

Pour ce faire, l'invention prévoit un pneumatique comportant une bande de roulement directionnelle, ladite bande de roulement comportant deux bords et un centre, cette bande de roulement comprenant une pluralité de blocs de hauteur H séparés par des rainures de largeur W, chaque bloc s'étendant de manière continue selon une courbure globale C d'un des bords vers le centre de ladite bande de roulement en formant une extrémité centrale de bloc, chaque bloc présentant une largeur WB et une longueur LB, cette largeur augmentant de l'extrémité centrale de bloc en direction du bord, tout ou partie des blocs de la bande de roulement comprenant une incision médiane de longueur S, ladite incision médiane s'étendant à partir de l'extrémité centrale de bloc selon une courbure C' sensiblement identique à la courbure C du bloc, dans lequel chaque bloc comporte une zone centrale s'étendant globalement selon un angle β1 tel que 35°≤β1≤65° avec une direction transversale (Y), une zone de bord s'étendant globalement selon un ange β3 tel que 0° ≤ β3 ≤ 10° avec la direction transversale (Y) et une zone de jonction entre la zone centrale et la zone de bord, et dans lequel pour deux blocs adjacents, la largeur W d'une rainure séparant ces deux blocs au niveau de leur zone centrale est déterminée de sorte que H*0,6≤ W ≤ H*0,8.

Un tel agencement de la bande de roulement permet de réduire fortement les risques de coincement de pierre dans les rainures. Le pneumatique présente par ailleurs de bonnes caractéristiques d'endurance.

De manière avantageuse, la largeur W de la rainure est comprise entre 4 mm et 5 mm.

Egalement de manière avantageuse, la hauteur H des blocs est comprise entre 6 mm et 8 mm.

De manière préférentielle, la largeur W est de 4.5 mm pour une valeur de hauteur H de bloc de 8 mm.

De manière avantageuse, au moins un des blocs comporte une paroi inclinée, ladite paroi inclinée faisant, avec une direction radiale, un angle φ tel que 5° ≤ φ ≤ 15°, de sorte que la largeur W de la rainure diminue dans la profondeur de cette rainure.

Selon un mode de réalisation avantageux, la rainure comporte un fond de rainure, et le pneumatique comprend une protubérance ou une pluralité de protubérances faisant saillie à partir du fond de cette rainure, la hauteur de cette protubérance étant inférieure au tiers de la hauteur H des blocs.

Selon un autre mode de réalisation avantageux, le pneumatique comporte une couche intermédiaire comprenant au moins un mélange élastomérique, ladite couche intermédiaire étant sous la bande de roulement et en contact avec une face radialement intérieure de cette bande de roulement, la couche intermédiaire présentant une épaisseur comprise entre 3 mm et 4 mm. L'épaisseur considérée pour évaluer la couche intermédiaire est l'épaisseur moyenne de cette couche le long de sa surface. Cette couche permet de réduire le risque de fissuration du fait des impacts de cailloux dans les creux. Les éventuelles amorces de fissures ne peuvent pas se propager dans le reste du pneumatique. Les nappes sommet sont ainsi protégées des éventuelles infiltrations d'eau susceptibles de dégrader le pneumatique.

En variante, le pneumatique comprend sous la couche intermédiaire une couche de frettage en contact avec cette couche intermédiaire, la couche de frettage comportant des renforts parallèles enrobés dans un mélange élastomérique, lesdits renforts parallèles formant un angle au plus égal à 10° avec une direction circonférentielle du pneumatique, l'épaisseur de la couche de frettage étant comprise entre 0,8 mm et 1,3 mm. La couche de frettage permet elle aussi de protéger les couches du sommet et permet de réduire le risque de fissuration.

Ce pneumatique est avantageusement prévu pour un usage toutes saisons.

Selon un mode de réalisation avantageux, tout ou partie des blocs de la bande de roulement comprennent une incision globalement circonférentielle agencée à l'extrémité de l'incision médiane opposée à l'extrémité centrale de bloc, ladite incision globalement circonférentielle s'étendant d'un bord à l'autre du bloc.

Cette incision favorise la mise à plat du pneumatique grâce au découplage créé. La rigidité en épaule est toutefois conservée pour permettre une bonne tenue en virage.

Selon un mode de réalisation avantageux, l'incision circonférentielle est en forme de V dont la pointe forme un angle α compris entre 100° et 170° et de préférence entre 150° et 170°. En variante, l'incision circonférentielle est en forme globale de « S ». Dans une autre variante, cette incision peut comprendre plusieurs petits segments tout en conservant une orientation globalement circonférentielle.

Egalement de manière avantageuse, tout ou partie des blocs de la bande de roulement comprennent par ailleurs au moins une incision latérale agencée dans le prolongement de l'incision médiane et découplée de cette dernière et de l'incision transversale.

Cette incision permet une augmentation du nombre d'arêtes dans la zone d'épaule et en conséquence améliore le freinage et la motricité sur routes enneigées. Le découplage permet de maintenir une certaine rigidité dans le bloc.

Selon un mode de réalisation avantageux, l'incision latérale s'élargit à partir d'une certaine profondeur de sculpture, formant un élargissement d'incision, l'élargissement d'incision débouchant sur l'épaule du pneumatique, au-delà du bord de la bande de roulement.

Cet élargissement d'incision permet de prolonger les caractéristiques favorables d'adhérence sur sol enneigé malgré l'usure des blocs, jusqu'à par exemple environ 3 mm de hauteur de blocs. Par ailleurs, le profil en forme de goutte d'eau permet de stocker de l'eau et favorise les performances sur sol mouillé.

Selon un mode de réalisation avantageux, au moins une partie des incisions médianes comportent un chanfrein d'incision. Le chanfrein d'incision est avantageusement localisé dans la zone intermédiaire. En variante, il se prolonge jusqu'à l'incision globalement circonférentielle.

Selon encore un mode de réalisation avantageux, au moins une partie des blocs sont agencés avec un chanfrein de bloc prévu au niveau du bord de fuite de la zone intermédiaire et/ou de la zone de bord. Préférentiellement ces chanfreins sont à 45°, avec une section comprise entre 1x1 mm et 2x2 mm. Ils peuvent aussi être constitué par un rayon (1 à 2 mm) se raccordant aux faces des blocs.

Selon un autre mode de réalisation avantageux, au moins une partie des incisions médianes comprend des moyens de rigidification reliant, pour chaque incision, les faces opposées de cette incision. Les moyens de rigidification sont particulièrement avantageux au niveau de la zone centrale, cette zone comportant l'angle le plus important par rapport à la direction transversale (Y).

Les moyens de rigidification sont de préférence agencés dans l'incision selon des intervalles de 5 à 20 mm. La hauteur de moyens de rigidification est préférentiellement comprise entre 40 et 80% de la hauteur maxi des incisions. Ainsi, ces moyens de rigidification ne se prolongent pas jusqu'à la surface de la bande de roulement quand le pneumatique est neuf.

De manière avantageuse, dans au moins une incision, l'espacement entre les moyens de rigidification est variable.

Egalement de manière avantageuse, les moyens de rigidification sont venus de matière avec la bande de roulement.

Egalement de manière avantageuse, les blocs sont constitués d'une composition élastomère basée sur un élastomère diénique, un système plastifiant et un système d'inter-liaisons, dans lequel la composition élastomère comporte une température de transition vitreuse comprise entre -40°C et -15°C et un module de cisaillement G* mesuré à 60°C compris entre 0,5 MPa et 1,1 MPa.

Une telle composition permet une utilisation dans des conditions hivernales avec des températures très froides sans dégradation des performances.

En outre, les Demanderesses ont constaté, de manière surprenante, que la bande de roulement selon l'invention, avec un aspect général des blocs évoquant un pneumatique de type été, comporte des caractéristiques comportementales particulièrement avantageuses sur sol enneigé et/ou glacé. Les limites de ces performances sont encore repoussées favorablement avec l'utilisation des compositions préalablement décrites.

En outre, on observe des gains avantageux des performances lorsque la température de transition vitreuse de la composition élastomère est comprise entre -20°C et -30°C.

Le module de cisaillement G* est de préférence compris entre 0,9 MPa et 1 MPa.

### DESCRIPTION DES FIGURES

Tous les détails de réalisation sont donnés dans la description qui suit, complétée par les figures 1 à 5, présentées uniquement à des fins d'exemples non limitatifs, et dans lesquelles :
- la figure 1 est une représentation schématique d'une portion d'une bande de roulement correspondant sensiblement à l'aire de contact ;
- la figure 2 est une représentation schématique d'un bloc pour une bande de roulement telle que celle de la figure 1 ;
- la figure 3 est une représentation schématique en coupe et en perspective d'un exemple de rainure avec paroi inclinée entre deux blocs ;
- la figure 4 est une variante de réalisation de l'arrangement de la figure 3 avec une protubérance en fond de rainure ;
- la figure 5 est une représentation schématique en coupe d'une portion de zone de sommet d'un pneumatique selon l'invention.

### DESCRIPTION DETAILLEE DE L'INVENTION

### DEFINITIONS

Dans le présent document, par longueur curviligne «L» ou «S», on entend une longueur mesurée en prenant en compte la courbure de l'élément « L » ou « S » mesuré.

Par «sculpture directionnelle », on entend une sculpture de bande de roulement dont les éléments de sculpture sont spécifiquement agencés pour optimiser les caractéristiques comportementales en fonction d'un sens de rotation prédéterminé. Ce sens de rotation est classiquement indiqué par une flèche sur le flanc du pneumatique. Dans une telle architecture, les bords des éléments de sculpture qui sont vers la direction de roulage sont désignés par le terme « bord d'attaque », tandis que les bords des éléments de sculpture qui sont opposés à la direction de roulage sont désignés par le terme « bord de fuite ».De plus, une « sculpture directionnelle », est une sculpture impliquant un sens de roulage préférentiel tel que, lorsqu'on fait tourner le pneumatique dans ledit sens préférentiel, ce pneumatique offre des propriétés d'adhérences au sol meilleures que celles offertes lorsqu'on fait tourner ledit pneumatique dans l'autre sens. Une sculpture directionnelle est par exemple une sculpture comportant des motifs de forme générale en V.

Par « incision », on entend une découpe ou fente mince (entre 0,1 et 2 mm) et allongée pratiquée dans un bloc de bande de roulement.

Par « incision médiane dans le bloc », on entend que cette incision médiane sépare ce bloc en deux parties de bloc globalement identiques. La différence de surface entre ces deux parties de bloc étant inférieure à 10%, par surface on entend celle pouvant être en contact avec le sol dans l'aire de contact.

Par « incision latérale », on entend une incision qui s'étend globalement selon la direction transversale Y, l'angle formé par la direction d'extension de cette incision avec la direction transversale Y étant inférieure à 15 degrés, en valeur absolue.

Par « incision latérale découplée de l'incision médiane », on entend qu'il existe une zone de gomme entre l'incision latérale et l'incision médiane. La longueur de cette zone de gomme est d'au moins 2 mm.

Par « incision circonférentielle », on entend une incision qui s'étend globalement selon la direction circonférentielle X, l'angle formé par la direction d'extension de cette incision avec la direction circonférentielle X étant inférieure ou égale à 20 degrés, en valeur absolue.

Par «chaque bloc s'étendant de manière continue d'un bord 3 vers le centre 4 », on entend que le bloc n'est pas interrompu par des rainures séparatives séparant ce bloc en différents sous-blocs. Par rainure, on entend une découpure dont les faces de matière ne se touchent pas dans les conditions usuelles de roulage. La largeur d'une rainure est supérieure ou égale à 2 mm. Ainsi, le fait que ces blocs ne soient pas interrompus par des rainures séparatives permet d'améliorer l'évacuation de l'eau du centre 4 vers le bord 3, la présence de telles rainures séparatives pouvant perturber l'écoulement du flux d'eau vers l'extérieur du pneumatique.

Par « courbure globale C du bloc », on entend que le bloc a une forme courbée. Cette courbure peut être constante ou continument variable. Dans une autre variante la courbure est constituée d'une succession de segments.

Par « courbure globale C' de l'incision médiane », on entend que l'incision médiane a une trace courbée. Cette courbure peut être constante ou continument variable. Dans une autre variante la courbure est constituée d'une succession de segments.

Par « bande de roulement », on entend la zone du pneumatique dont au moins une partie est soumise à un contact avec le sol et est usée par ce contact avec le sol.

### DESCRIPTION DES FIGURES

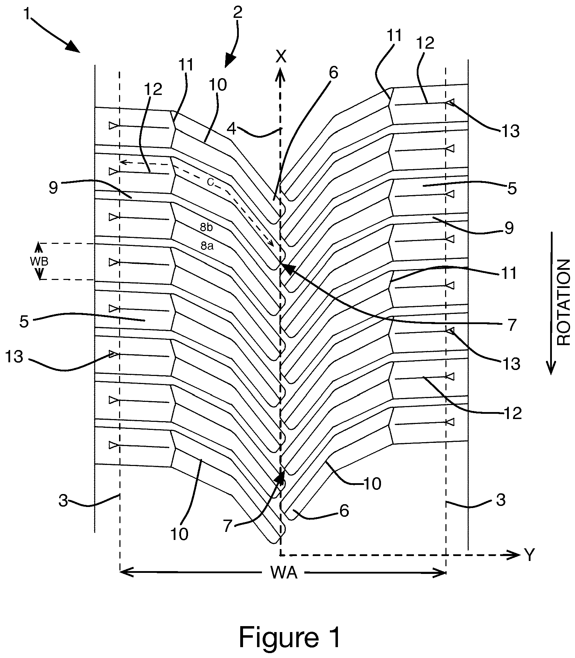

La figure 1 illustre sensiblement l'aire de contact d'une bande de roulement 2 de pneumatique 1. L'aire de contact comporte une largeur maximale WA définie par la norme ETRTO et illustrée sur la figure 1 entre les lignes pointillées délimitées par la largeur WA. La norme ETRTO prévoit une largeur WA = (1.075-0.005ar)*S^{1.001} avec « ar » le rapport nominal d'aspect et S la grosseur du boudin théorique sur la jante de mesure. Les bords latéraux 3 de la bande de roulement sont en correspondance avec les lignes pointillées délimitant la largeur WA.

Selon l'invention, la bande de roulement 2 comprend une pluralité de blocs 5. Chacun des blocs s'étend depuis un bord 3 de la bande de roulement vers l'axe de centre 4 de la bande de roulement en suivant globalement une courbure C. L'expression « vers le centre » signifie ici que le bloc se termine au niveau du centre, ou encore juste avant le centre ou juste après le centre. Le centre 4 est défini par une ligne s'étendant dans la direction circonférentielle et divisant la bande de roulement en deux moitiés. Pour les dimensions larges de pneumatiques, un sillon longitudinal peut être rajouté en ce centre 4.

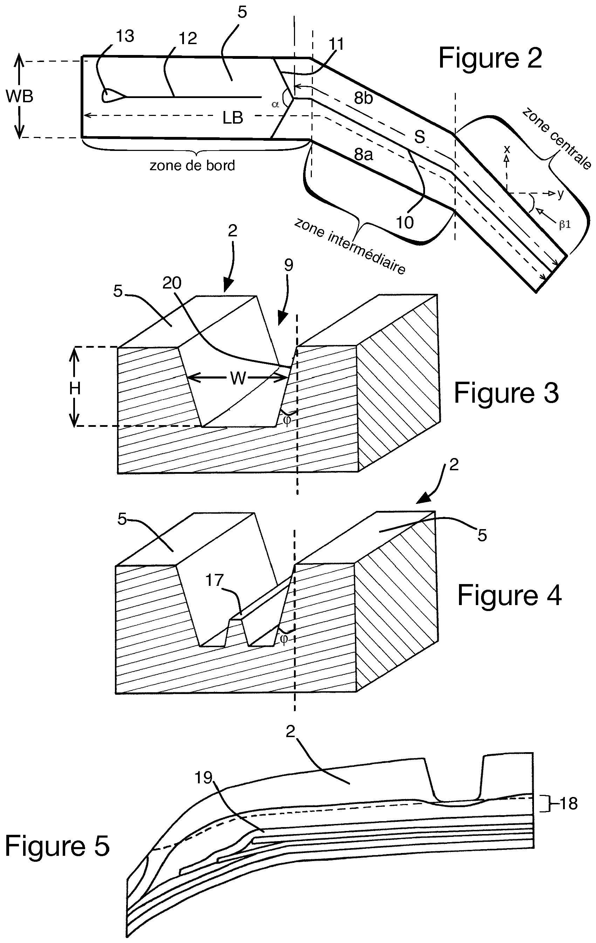

Chacun des blocs est de longueur LB et de largeur WB, cette largeur augmentant de l'extrémité centrale de bloc en direction du bord 3. Les blocs sont avantageusement configurés en trois zones, soit une zone centrale, une zone intermédiaire et une zone de bord. La zone centrale forme un angle β1 par rapport à la direction transversale (Y) compris entre 35° et 65° et plus préférentiellement de sensiblement 50° +-5°. En bordure des blocs, on trouve la zone de bord avec un angle β3 par rapport à la direction transversale (Y) compris entre 0° et 10°. Afin d'assurer une liaison continue entre ces deux zones, la zone intermédiaire est prévue. Cette zone intermédiaire permet d'assurer la liaison entre la zone centrale et la zone de bord avec un angle β2 permettant une continuité entre les trois zones. Du fait de cet agencement en trois zones, les blocs comportent une courbure C, progressive depuis le bord 3 en se dirigeant vers le centre 4. Pour la mise en forme de cette courbure, les côtés des blocs forment, en fonction des cas, soit une ligne courbe continue des bords 3 vers le centre 4, courbure pouvant être variable, soit une pluralité de segments angulés, tel que représentés à la figure 2. Dans le cas où une zone de bloc est configurée par une succession de segments, l'angle β est l'angle moyen. Dans le cas où une zone de bloc est configurée par un segment curviligne, l'angle β correspond à la moyenne des angles le long de la courbure.

Au moins une partie des blocs 5 comprend une incision médiane 10 s'étendant le long du bloc en suivant une courbure C' similaire à la courbure C du bloc. Cette incision permet de séparer le bloc en deux parties 8a et 8b, de volumes préférentiellement sensiblement identiques. En variante, seulement une partie des blocs 5 comprend une incision médiane 10.

L'incision médiane 10 permet de diminuer la rigidité du bloc 5 en le séparant en deux demi-blocs. La rigidité de chaque demi-bloc est sensiblement identique, contribuant à uniformiser l'usure de ces deux demi-blocs. L'incision médiane 10 comporte une longueur curviligne S. Cette longueur S de l'incision médiane est préférentiellement déterminée de sorte que 0,5.L ≤ S ≤ 0,8.L.

Selon l'invention, au moins une partie des blocs 5 comprend une incision 11 globalement circonférentielle agencée à l'extrémité de l'incision médiane 10. Par « globalement circonférentielle », on entend un agencement tel que le rapport de projection Ry/Rx correspond à 0 ≤ Ry/Rx ≤ 0,6. Cette incision produit un effet de découplage favorisant la mise à plat du pneumatique.

Les exemples des figures 1 et 2 illustrent des incisions globalement circonférentielles 11 en forme de V dont la pointe du V forme un angle α compris entre 100° et 170° et de préférence entre 150° et 170°. Selon les modes de réalisations, la pointe du V peut être orientée soit vers le centre de la bande de roulement, soit vers le bord proximal de la bande de roulement. Une incision en forme de V permet d'améliorer l'adhérence dans les directions longitudinales et transversales.

Enfin, les blocs 5 prévoient au moins une incision latérale 12, agencée au niveau de la zone de bord de bloc. Cette incision est décalée transversalement par rapport à l'incision médiane 10 et l'incision circonférentielle 11. Le décalage entre cette incision et les autres incisions est de préférence entre 3 et 6 mm. Ce décalage, en augmentant localement la rigidité, contribue à améliorer l'efficacité du freinage sur sol sec.

Préférentiellement, cette incision latérale 12 s'élargit à partir d'une certaine profondeur de sculpture, formant un élargissement 13 d'incision. Cet élargissement 13 d'incision débouche sur l'épaule du pneumatique et forme un profil en forme de goutte d'eau.

De manière avantageuse, les incisions 10 et 12 sont agencées au niveau de la fibre neutre des blocs, c'est-à-dire de façon à séparer les blocs en deux parties de volumes sensiblement identiques.

La profondeur des incisions se situe préférentiellement entre 85% et 105% de la profondeur des rainures délimitant les blocs.

La figure 3 illustre une représentation schématique en coupe et en perspective d'une portion de bande de roulement 2 d'un pneumatique selon l'invention. Une rainure 9 circonférentielle permet de séparer deux blocs 5 adjacents. La largeur W d'une rainure séparant deux blocs, au niveau de la zone centrale, est déterminée de sorte que H*0,6≤ W ≤ H*0,8.

De manière préférentielle, cette largeur W est de 4.5 mm pour une valeur de hauteur H de bloc de 8 mm.

Au moins une des parois 20 de bloc délimitant la rainure 9 est prévue avec un angle φ par rapport à la direction radiale. Dans cet exemple, les deux parois 20 délimitant une même rainure 9 sont inclinées. L'angle φ des parois inclinées est de préférence entre 6° et 20°. Au-delà de 20°, l'effet de rétrécissement de la rainure est susceptible de réduire les performances d'évacuation d'eau de cette dernière.

La figure 4 est une variante de réalisation de la figure 3 dans laquelle une protubérance 17 s'étend circonférentiellement sur au moins une portion de la rainure 9. De manière avantageuse, une pluralité de protubérances 17 sont régulièrement réparties dans le fond de la rainure. La hauteur des protubérances 17 n'excède pas un tiers de la hauteur H des blocs.

La figure 5 montre une coupe d'une portion d'un sommet d'un pneumatique selon l'invention dans lequel une couche intermédiaire 18 est prévue sous la bande de roulement 2 et en contact avec une face radialement intérieure de la bande de roulement. La couche intermédiaire comprend au moins un mélange élastomérique. Son épaisseur est préférentiellement comprise entre 3 mm et 4 mm.

Dans l'exemple illustré, une couche de frettage 19 est disposée sous la couche intermédiaire 18 et est en contact avec cette couche intermédiaire. La couche de frettage 19 prévoit des renforts parallèles enrobés dans un mélange élastomérique. Les renforts sont alignés sensiblement selon la direction circonférentielle, c'est à dire qu'ils forment avec cette direction un angle au plus égal à 10°. L'épaisseur de la couche de frettage est comprise entre 0,8 mm et 1,3 mm.

Les blocs de la bande de roulement sont constitués d'une composition élastomère basée sur un élastomère diénique, un système plastifiant et un système d'inter-liaisons, dans lequel la composition élastomère comporte une température de transition vitreuse comprise entre -40°C et -15°C et un module de cisaillement G* mesuré à 60°C compris entre 0,5 MPa et 1,1 MPa.

L'élastomère diénique est sélectionné dans le groupe comportant le caoutchouc naturel, le caoutchouc styrène-butadiène, le caoutchouc synthétique polyisoprène, le caoutchouc polybutadiène et toutes combinaisons entre ces constituants. Le système plastifiant comprend des plastifiants sélectionnés parmi une huile plastifiante, une résine plastifiante ou toute combinaison entre ces constituants.

La résine plastifiante est une résine polylimonène. L'huile plastifiante est sélectionnée parmi une huile à base de pétrole, une huile végétale, ou toute combinaison de ces huiles.

Les Figures et leurs descriptions faites ci-dessus illustrent l'invention plutôt qu'elles ne la limitent. En particulier, l'invention et ses différentes variantes viennent d'être décrites en relation avec un exemple particulier comportant des blocs identiques sur toute la surface de la bande de roulement.

Néanmoins, il est évident pour un homme du métier que l'invention peut être étendue à d'autres modes de réalisation dans lesquels en variantes, on prévoit des blocs non identiques soit le long de l'alignement circonférentiel, soit de part et d'autre de la ligne centrale de la bande de roulement. On peut également prévoir qu'au moins une des extrémités des incisions médianes 10 comprend un pont dans la partie centrale de la bande de roulement et/ou entre l'incision médiane et l'incision circonférentielle.

Les signes de références dans les revendications n'ont aucun caractère limitatif. Les verbes "comprendre" et "comporter" n'excluent pas la présence d'autres éléments que ceux listés dans les revendications.

### Numéros de référence employés sur les figures

- 1: Pneumatique
- 2: Bande de roulement
- 3: Bord de bande de roulement
- 4: Axe de centre de bande de roulement
- 5: Bloc
- 6: Extrémité centrale du bloc
- 7: Paroi d'extrémité centrale du bloc
- 8a: Partie bord d'attaque du bloc
- 8b: Partie bord de fuite du bloc
- 9: Rainure
- 10: Incision médiane
- 11: Incision globalement circonférentielle
- 12: Incision latérale
- 13: Elargissement d'incision dans la profondeur

- 17: Protubérance
- 18: Couche intermédiaire
- 19: Couche de frettage
- 20: Paroi inclinée de bloc

## Revendications

1. Pneumatique (1) comportant une bande de roulement (2) directionnelle ladite bande de roulement (2) comportant deux bords (3) et un centre (4), cette bande de roulement comprenant une pluralité de blocs (5) de hauteur H séparés par des rainures (9) de largeur W, chaque bloc s'étendant de manière continue selon une courbure globale C, d'un des bords (3) vers le centre (4) de ladite bande de roulement, en formant une extrémité centrale (6) de bloc, chaque bloc (5) présentant une largeur WB et une longueur LB, cette largeur augmentant de l'extrémité centrale (6) de bloc en direction du bord (3), **caractérisé en ce que** tout ou partie des blocs (5) de la bande de roulement comprend une incision médiane (10) de longueur S, ladite incision médiane (10) s'étendant à partir de l'extrémité centrale (6) de bloc selon une courbure C' sensiblement identique à la courbure C du bloc, chaque bloc comportant une zone centrale s'étendant globalement selon un angle β1 tel que 35°≤β1≤65° avec une direction transversale (Y), une zone de bord s'étendant globalement selon un angle β3 tel que 0° ≤ β3 ≤ 10° avec la direction transversale (Y) et une zone intermédiaire entre la zone centrale et la zone de bord, et **en ce que** pour deux blocs adjacents, la largeur W d'une rainure (9) séparant ces deux blocs au niveau de leur zone centrale est déterminée de sorte que H*0,6≤ W ≤ H*0,8.

2. Pneumatique selon la revendication 1, **caractérisé en ce que** la largeur W de la rainure est comprise entre 4 mm et 5 mm.

3. Pneumatique selon l'une des revendications 1 ou 2, **caractérisé en ce que** la hauteur H des blocs est comprise entre 6 mm et 8 mm.

4. Pneumatique selon l'une des revendications 1 à 3, **caractérisé en ce que** au moins un des blocs comporte une paroi inclinée (20), ladite paroi inclinée faisant, avec une direction radiale, un angle φ tel que 5° ≤ φ ≤15°, de sorte que la largeur W de la rainure (9) diminue dans la profondeur de cette rainure.

5. Pneumatique selon l'une des revendications 1 à 4, la rainure (9) comportant un fond de rainure, **caractérisé en ce que** le pneumatique comprend une protubérance ou une pluralité de protubérances (17) faisant saillie à partir du fond de cette rainure, la hauteur de cette protubérance étant inférieure au tiers de la hauteur H des blocs.

6. Pneumatique selon l'une des revendications 1 à 5, **caractérisé en ce qu'**il comporte une couche intermédiaire (18), ladite couche intermédiaire comprenant au moins un mélange élastomérique, ladite couche intermédiaire (18) étant sous la bande de roulement (2) et en contact avec une face radialement intérieure de cette bande de roulement, et **en ce que** la couche intermédiaire (18) présente une épaisseur comprise entre 3 mm et 4 mm.

7. Pneumatique selon la revendication 6, **caractérisé en ce qu'**il comprend, sous la couche intermédiaire (18), une couche de frettage en contact avec cette couche intermédiaire, la couche de frettage (19) comportant des renforts parallèles enrobés dans un mélange élastomérique, lesdits renforts parallèles formant un angle au plus égal à 10° avec une direction circonférentielle du pneumatique et **en ce que** l'épaisseur de la couche de frettage est comprise entre 0,8 mm et 1,3 mm.

## Patentansprüche

1. Reifen (1), welcher einen laufrichtungsgebundenen Laufstreifen (2) aufweist, wobei der Laufstreifen (2) zwei Ränder (3) und eine Mitte (4) aufweist, wobei dieser Laufstreifen eine Vielzahl von Blöcken (5) der Höhe H aufweist, die durch Rillen (9) der Breite W getrennt sind, wobei sich jeder Block durchgehend entlang einer allgemeinen Krümmung C von einem der Ränder (3) zur Mitte (4) des Laufstreifens hin erstreckt, wobei er ein zentrales Ende (6) des Blocks bildet, wobei jeder Block (5) eine Breite WB und eine Länge LB aufweist, wobei diese Breite vom zentralen Ende (6) des Blocks in Richtung des Randes (3) zunimmt, **dadurch gekennzeichnet, dass** alle oder einige der Blöcke (5) des Laufstreifen einen mittig verlaufenden Einschnitt (10) der Länge S umfassen, wobei sich der mittig verlaufende Einschnitt (10) vom zentralen Ende (6) des Blocks aus entlang einer Krümmung C' erstreckt, die im Wesentlichen mit der Krümmung C des Blocks identisch ist, wobei jeder Block einen zentralen Bereich, der sich allgemein unter einem Winkel β1 mit 35°≤β1≤65° bezüglich einer Querrichtung (Y) erstreckt, einen Randbereich, der sich allgemein unter einem Winkel β3 mit 0°≤β3<10° bezüglich der Querrichtung (Y) erstreckt, und einen Zwischenbereich zwischen dem zentralen Bereich und dem Randbereich aufweist, und dadurch, dass für zwei benachbarte Blöcke die Breite W einer Rille (9), die diese zwei Blöcke trennt, an deren zentralem Bereich derart bestimmt ist, dass H*0,6 ≤ W ≤ H*0,8 ist.

2. Reifen nach Anspruch 1, **dadurch gekennzeichnet, dass** die Breite W der Rille zwischen 4 mm und 5 mm liegt.

3. Reifen nach einem der Ansprüche 1 oder 2, **dadurch gekennzeichnet, dass** die Höhe H der Blöcke zwischen 6 mm und 8 mm liegt.

4. Reifen nach einem der Ansprüche 1 bis 3, **dadurch gekennzeichnet, dass** wenigstens einer der Blöcke eine geneigte Wand (20) aufweist, wobei die geneigte Wand mit einer radialen Richtung einen Winkel φ mit 5° ≤ φ ≤ 15° bildet, derart, dass die Breite W der Rille (9) in der Tiefe dieser Rille abnimmt.

5. Reifen nach einem der Ansprüche 1 bis 4, wobei die Rille (9) einen Rillenboden aufweist, **dadurch gekennzeichnet, dass** der Reifen einen Vorsprung oder eine Vielzahl von Vorsprüngen (17) aufweist, die vom Boden dieser Rille aus vorstehen, wobei die Höhe dieses Vorsprungs kleiner als ein Drittel der Höhe H der Blöcke ist.

6. Reifen nach einem der Ansprüche 1 bis 5, **dadurch gekennzeichnet, dass** er eine Zwischenschicht (18) aufweist, wobei die Zwischenschicht wenigstens eine Elastomermischung umfasst, wobei sich die Zwischenschicht (18) unter dem Laufstreifen (2) und in Kontakt mit einer radial inneren Seite dieses Laufstreifens befindet, und dadurch, dass die Zwischenschicht (18) eine Dicke aufweist, die zwischen 3 mm und 4 mm liegt.

7. Reifen nach Anspruch 6, **dadurch gekennzeichnet, dass** er unter der Zwischenschicht (18) eine Versteifungsschicht umfasst, die sich in Kontakt mit dieser Zwischenschicht befindet, wobei die Versteifungsschicht (19) parallele Festigkeitsträger aufweist, die von einer Elastomermischung umhüllt sind, wobei die parallelen Festigkeitsträger einen Winkel von höchstens 10° mit einer Umfangsrichtung des Reifens bilden, und dadurch, dass die Dicke der Versteifungsschicht zwischen 0,8 mm und 1,3 mm liegt.

## Claims

1. Tyre (1) comprising a directional tread (2), said tread (2) comprising two edges (3) and a centre (4), this tread comprising a plurality of blocks (5) of height H that are separated by grooves (9) of width W, each block extending continuously along an overall curvature C from one of the edges (3) towards the centre (4) of said tread, forming a block central end (6), each block (5) having a width WB and a length LB, this width increasing from the block central end (6) in the direction of the edge (3), all or some of the blocks (5) of the tread comprising a median sipe (10) of length S, said median sipe (10) extending from the block central end (6) along a curvature C' substantially identical to the curvature C of the block, **characterized in that** each block comprises a central zone extending generally at an angle β1 such that 35°≤β1≤65° with respect to a transverse direction (Y), an edge zone extending generally at an angle β3 such that 0° ≤ β3 ≤ 10° with respect to the transverse direction (Y), and an intermediate zone between the central zone and the edge zone, and **in that**, for two adjacent blocks, the width W of a groove (9) separating these two blocks in their central zone is determined such that H*0.6≤ W ≤ H*0.8.

2. Tyre according to Claim 1, **characterized in that** the width W of the groove is between 4 mm and 5 mm.

3. Tyre according to either of Claims 1 and 2, **characterized in that** the height H of the blocks is between 6 mm and 8 mm.

4. Tyre according to one of Claims 1 to 3, **characterized in that** at least one of the blocks has an inclined wall (20), said inclined wall making an angle φ with a radial direction such that 5° ≤ φ ≤15°, such that the width W of the groove (9) decreases into the depth of this groove.

5. Tyre according to one of Claims 1 to 4, the groove (9) comprising a groove bottom, **characterized in that** the tyre comprises a protuberance or a plurality of protuberances (17) that protrude from the bottom of this groove, the height of this protuberance being less than one third of the height H of the blocks.

6. Tyre according to one of Claims 1 to 5, **characterized in that** it comprises an intermediate layer (18), said intermediate layer comprising at least one elastomeric compound, said intermediate layer (18) being under the tread (2) and in contact with a radially inner face of this tread, and **in that** the intermediate layer (18) has a thickness of between 3 mm and 4 mm.

7. Tyre according to Claim 6, **characterized in that** it comprises, under the intermediate layer (18), a hooping layer in contact with this intermediate layer, the hooping layer (19) comprising parallel reinforcers that are coated in an elastomeric compound, said parallel reinforcers making an angle at most equal to 10° with a circumferential direction of the tyre, and **in that** the thickness of the hooping layer is between 0.8 mm and 1.3 mm.
